# EUROPÄISCHE PATENTSCHRIFT

(11) **EP 3 521 546 B1**
(45) Veröffentlichungstag und Bekanntmachung des Hinweises auf die Patenterteilung: **21.07.2021**
(21) Anmeldenummer: 19154410.5
(22) Anmeldetag: 30.01.2019
(51) Int. Cl.: E06B 9/72, E06B 9/80, H02K 7/12, H02K 49/04, H02K 49/10

(54) **ROHRFÖRMIGER ANTRIEB MIT HYSTERESEBREMSE**
TUBULAR DRIVE WITH HYSTERESIS BRAKE
ENTRAINEMENT TUBULAIRE AVEC FREIN A HYSTÉRESIS

(30) Priorität: 31.01.2018 DE 102018000773
(43) Veröffentlichungstag der Anmeldung: 07.08.2019
(73) Patentinhaber: Gerhard Geiger GmbH & Co. KG, 74321 Bietigheim-Bissingen (DE)
(72) Erfinder: Heene, Florian, 71732 Tamm (DE); Schlageter, René, 71665 Vaihingen/Enz (DE)
(74) Vertreter: Jeck, Anton

(56) Entgegenhaltungen:
- DE-A1- 19 746 359
- DE-A1-102005 041 973

## Beschreibung

Die vorliegende Erfindung betrifft einen Antrieb gemäß dem Oberbegriff des Anspruchs 1, sowie ein Verfahren zum verschleißarmen Bereitstellen einer variablen Bremswirkung eines solchen Antriebs nach Anspruch 12.

Bei einem solchen Antrieb zum Antreiben von Sonnenschutzsystemen, Rollläden und Rolltoren, ist eine Hysteresebremse vorgesehen, welche einen mehrteiligen Aufbau aufweist. Dabei ist ein mindestens erster Teil der Bremse statisch an dem Antrieb vorgesehen, und mindestens ein zweiter Teil der Bremse wirkt mit einem rotierenden Mittel, insbesondere einer Antriebswelle des Antriebs, zusammen.

Aus dem Stand der Technik sind Bremsvorrichtungen für Antriebe bekannt, welche über einen Schleifkontakt eine reibungsbedingte Bremswirkung erzeugen. Diese unterliegen im Reibungsbereich einer bremsbedingten Abnutzung, wodurch ein Materialverschleiß und eine erhöhte Hitzeentwicklung im Bereich der Bremse entstehen. Beide auftretenden Nebeneffekte führen dazu, dass die Lebensdauer der Bremse begrenzt ist und eine regelmäßige Wartung benötigt wird, um die Bremswirkung aufrechtzuerhalten. Weiterhin ist die Bremswirkung, wenn auch im "ungebremsten Zustand" der Reibungskontakt vermindert ist, stets gegenwärtig, weshalb der Antrieb gegen die Bremse arbeiten muss.

Ausgehend von diesem Stand der Technik liegt der vorliegenden Erfindung die **Aufgabe** zugrunde, einen verschleißarmen Antrieb mit einer anpassbaren Bremsleistung bereitzustellen.

Erfindungsgemäß wird die Aufgabe durch einen Antrieb mit den kennzeichnenden Merkmalen des Anspruchs 1 gelöst.

Erfindungsgemäß ist es vorgesehen, dass eine Verstelleinrichtung einen Abstand zwischen einem statisch vorgesehenen Teil und dem mindestens zweiten Teil verändert.

Eine Hysteresebremse ist eine Bremse, die auf der Wirkung eines Magneten oder Elektromagneten auf ein sich relativ dazu bewegendes, ferromagnetisches Material basiert. Welcher Teil der bremse sich hierbei bewegt kann unerheblich ein. Der Energieverlust einer Bewegung entsteht durch die wiederholte Ummagnetisierung des Materials. Durch den Energieverlust wird eine Bremswirkung bereitgestellt.

Aus der DE 10 2005 04197 3 A1 zeigt eine Hysteresekupplung mit variabler Bremswirkung, bei welcher erster Teil der Bremse statisch vorgesehen ist und ein zweiter Teil der Bremse mit einem rotierenden Mittel zusammen wirkt.

Die DE 197 46 359 A1 lehrt eine Kühlmittelpumpe für Kraftfahrzeuge, die ohne Wellenabdichtung des Strömungsraums gegenüber dem Lagergehäuse der Antriebsriemenscheibe ausgebildet ist. Die Pumpe zeichnet sich dadurch aus, dass das Flügelrad der Kühlmittelpumpe über einen dauermagnetische Kopplung angetrieben wird, bei welcher sich auf einer der beiden einander zugeordneten Kupplungswellen ein mehrpolige sektorenförmigen magnetisierte Magnetscheibe und auf der anderen Kupplungswelle eine Scheibe aus Hysteresewerkstoff angeordnet ist.

Hysteresebremsen verwenden beispielweise eine an der zu bremsenden Welle statische gegenüber liegende, statisch angebrachte Scheiben oder Ringe aus einem ferromagnetischen Material (z.B. Eisenlegierung/Hystereseband), welches während der Bremswirkung der Bremse in einem Magnetfeld eines Magneten angeordnet ist. Das Magnetfeld wird beispielsweise durch Dauermagnete aufgebracht, welche an der Welle angeordnet sein kann. Die Positionen von Magneten und magnetisierbarem Material können auch vertauscht sein.

Soweit das ferromagnetische Material, insbesondere ein Hystereseband, einem magnetischen Element, wie beispielsweise einem Dauermagneten, gegenübersteht und dieses entlang des Hysteresebands bewegt wird (oder anders herum), wird durch die wiederholte Ummagnetisierung des Materials eine Gegenkraft auf den Magneten ausgeübt, die der Relativbewegung entgegensteht. Die Bremse kann insbesondere dazu verwendet werden, einer unbeabsichtigten Bewegung des Antriebs, einer Antriebswelle, eines Getriebes oder eines Sonnenschutzsystems, eines Rollladens oder eines Rolltors entgegenzuwirken. Schon ein geringes Brems- beziehungsweise Rastmoment der Bremse kann die Position der voran genannten Elemente halten, wenn beispielsweise eine entsprechende Getriebeübersetzung zwischen der Einrichtung, insbesondere dem Sonnenschutzsystem, dem Rollladen oder dem Rolltor, und der Bremse vorgesehen ist. Die Bremse kann beispielsweise direkt in den Antrieb integriert sein. Vorzugsweise kann die Bremse auf und an beziehungsweise mit einer Antriebswelle, welche mit dem Antrieb verbunden ist, befestigt oder wirkverbunden sein. Grundsätzlich kann die Bremse in jedem Bereich des Antriebs oder der zu bewegenden Einrichtung vorgesehen sein, welcher zumindest ein bewegliches vorzugsweise rotierendes Element und ein statisches Element aufweist.

Erfindungsgemäß umfasst der Antrieb zumindest den mindestens einen antreibenden Motor mit mindestens einer Antriebswelle, vorzugsweise auch ein Getriebe und weitere Einrichtungen zum Antreiben von beispielsweise Sonnenschutzsystemen, Rollläden und Rolltoren.

Die Antriebswelle kann insbesondere zur Übertragung des Antriebsmoments des Motors auf das Getriebe oder die zu betätigenden Einrichtungen, wie beispielsweise Sonnenschutzsysteme, Rollläden und Rolltore, vorgesehen sein.

Der mehrteilige Aufbau der Hysteresebremse kann zumindest 2-teilig sein, wobei zur Verwirklichung des Grundprinzips der Hysteresebremse wenigstens ein ferromagnetisches Element, insbesondere ein Hystereseelement, an dem mindestens ersten Teil und mindestens ein Dauermagnet an dem mindestens zweiten Teil der Bremse vorgesehen sein können. Grundsätzlich kann es denkbar sein, dass am ersten und/oder am zweiten Teil sowohl Dauermagnete als auch Hystereseelemente in spezifischer Anordnung vorgesehen sind.

Die Bremswirkung, die durch die Wechselwirkung zwischen Hystereseelement und Dauermagnet bewirkt wird, kann insbesondere durch den Abstand der beiden Elemente entstehen. Hierbei kann insbesondere eine Vergrößerung des Abstands zwischen Hystereseelement und (Dauer-)Magnet(-element) eine Verringerung der Bremswirkung bewirken. Durch eine Verringerung des Abstands kann die Bremswirkung der Hysteresebremse verstärkt werden.

Ob das Hystereseelement beziehungsweise Hystereseband oder die mehreren Hystereseelemente vorrangig am ersten Teil oder am zweiten Teil der Hysteresebremse angeordnet sind, kann von untergeordneter Bedeutung sein. Entsprechendes gilt für die Anordnung eines oder mehrerer Dauermagneten. Für die Funktionalität der Hysteresebremse ist es jedoch entscheidend, dass zumindest ein Hystereseelement relativ zu einem Dauermagnet(Element) bewegt wird.

Die erfindungsgemäß beanspruchte Verstelleinrichtung kann insbesondere dazu bereitgestellt sein, einen Abstand zwischen dem ersten Teil und dem zweiten Teil beziehungsweise zwischen einem Hystereseelement und einem Dauermagnet(Element) zu bewirken. Die Verstelleinrichtung kann hierbei insbesondere reversibel arbeiten, kann also einen Abstand vergrößern oder ihn auch wieder verkleinern. Das Verkleinern des Abstands kann hierbei entweder direkt über die Verstelleinrichtung oder über weitere Mittel erfolgen.

Man erkennt, dass die vorliegende Erfindung dann verwirklicht ist, wenn eine Hysteresebremse Einfluss auf das Drehmoment eines Antriebs oder eines seiner angetriebenen Einrichtungen auswirkt, wobei der Einfluss der Hysteresebremse auf das Drehmoment aufgrund einer Verstelleinrichtung von dem Drehmoment selbst beziehungsweise einer Drehzahl abhängig sein kann. Hierzu kann die Verstelleinrichtung, insbesondere in Abhängigkeit von einem Drehmoment oder einer Drehzahl des Antriebs oder einer beweglichen vorzugsweise rotierenden Einrichtung des Antriebs, eine Verstellung des Abstands zwischen dem mindestens ersten und dem mindestens zweiten Teil der Hysteresebremse bewirken. Hierbei kann zumindest der erste Teil vorzugsweise statisch angeordnet und der mindestens zweite Teil beweglich gegenüber dem ersten Teil gelagert sein.

Nach einer bevorzugten Weiterbildung der vorliegenden Erfindung ist es vorgesehen, dass der zweite Teil der Bremse gegenüber dem rotierenden Mittel des Antriebs verlagerbar angeordnet ist. Bei der Verlagerung kann es sich insbesondere um eine Verschiebung längst zur Rotationsachse des Mittels oder parallel dazu handeln. Die Verlagerung kann insbesondere dazu geeignet sein, einen Abstand zu dem ersten Teil der Bremse zu verändern, vorzugsweise zu vergrößern und/oder zu verkleinern.

Eine zweckmäßige Weiterbildung der vorliegenden Erfindung kann darin bestehen, dass die Verlagerung des zweiten Teils gegenüber dem rotierenden Mittel als eine Linksverschiebung entlang oder parallel zu einer Rotationsachse des rotierenden Mittels bereitgestellt ist. Hierzu kann beispielsweise ein Gleitkontakt zwischen dem rotierenden Mittel und dem zweiten Teil der Bremse vorgesehen sein.
Weitere Einrichtungen können vorgesehen sein, eine kontrollierte Verlagerung des zweiten Teils entlang oder parallel zu einer Rotationsachse des rotierenden Mittels bereitzustellen. Dabei kann es sich beispielsweise um eine Hülse, ein Gleitlager oder eine sonstige Einrichtung handeln, welche eine geführte Verschiebung des zweiten Mittels bereitstellt (Übertragungsmittel). Weitere Einrichtungen können als Teil des rotierenden Mittels oder der Verstelleinrichtung bereitgestellt sein, die Verschiebung des zweiten Teils gegenüber dem ersten Teil der Bremse und/oder dem rotierenden Mittel zu begrenzen und/oder in Abhängigkeit von einer Drehzahl und/oder einem Drehmoment zu ermöglichen. Diese Teile können ebenfalls als Teil eines Übertragungsmittels bereitgestellt sein.

Erfindungsgemäß ist es vorgesehen, dass die Verlagerung des zweiten Teils mittels eines Antriebsmoments eines Motors des Antriebs über ein Übertragungsmittel bewirkbar ist.

Eine zweckmäßige Weiterbildung der vorliegenden Erfindung besteht darin, dass das Übertragungsmittel mindestens 2-teilig gebildet ist, wobei ein erster Teil des Übertragungsmittels mit dem zweiten Teil der Bremse und der zweite Teil des Übertragungsmittels mit dem rotierenden Mittel des Antriebs zusammenwirken. Das Übertragungsmittel kann insbesondere bereitgestellt sein, eine Rotationsbewegung des rotierenden Mittels in eine Bewegung des zweiten Teils der Bremse parallel oder entlang der Rotationsachse des rotierenden Mittels zu übertragen oder umzulenken. Grundsätzlich kann das Übertragungsmittel Teil der Verstelleinrichtung sein. In einer Ausführungsform können Verstelleinrichtung und Übertragungsmittel auch dieselbe Einrichtung sein.

Für eine Übertragung oder Umlenkung der Rotation des rotierenden Mittels in eine Bewegung parallel oder entlang der Rotationsachse des rotierenden Mittels können an dem rotierenden Mittel, dem Übertragungsmittel oder der Verstelleinrichtung Wirkflächen oder andere Einrichtungen bereitgestellt sein, die durch Verschiebung oder Verlagerung eine Längsbewegung des zweiten Teils der Bremse durch eine Rotation des rotierenden Mittels bewirken. Das Antriebsmoment, welches an dem rotierenden Mittel des Antriebs anliegt, oder dessen Drehzahl können hierbei direkt eine Kraftübertragung auf den zweiten Teil der Bremse, beispielsweise über das rotierende Mittel, das Übertragungsmittel oder die Verstelleinrichtung, bewirken.

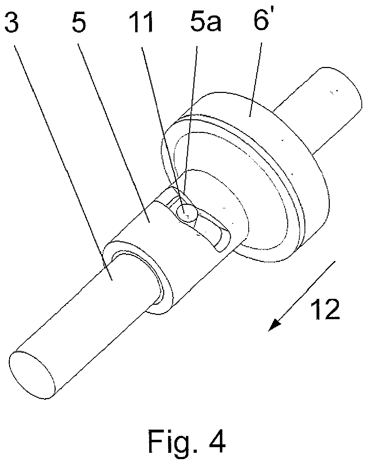

In einer bevorzugten Ausführungsform ist das Übertragungsmittel als Zapfen-Nut-Anordnung vorgesehen. Dabei können beispielsweise der Zapfen an einer rotierenden Welle und die Nut, in welche der Zapfen eingreift, an einem zweiten Teil der Bremse vorgesehen sein. Die Nut kann eine offene oder geschlossene Form aufweisen. Vorzugsweise weist sie entlang einer Rotationsachse eine V-förmige Form auf, in welcher der Zapfen bei einer Rotation zu beiden Seiten eine axiale Verschiebung des zweiten Teils der Bremse bewirkt. In diesem Zusammenhang wird insbesondere auf Figur 4 verwiesen, die eine solche V-Form zeigt. Rotierender Teil des Antriebs und die Verstelleinrichtung/Übertragungsmittel können auch mittels korrelierender Funktions- oder Wirkflächen an den beiden Einrichtungen (rotierendes Mittel, Verstelleinrichtung/Übertragungsmittel eine (axiale) Verlagerung der Verstelleinrichtung/Übertragungsmittel bewirken.

Vorzugsweise ist es vorgesehen, dass mindestens einer der zwei Teile des Übertragungsmittels mit korrelierenden Wirkflächen bereitgestellt ist bereitgestellt sind, die gegenüber der Rotationsache eine von einem 90°- oder 180°-Winkel abweichende Ausrichtungsneigung, also vorzugsweise eine schräge Ausrichtung, aufweisen, wobei durch das Antriebsmoment eine Relativverschiebung der beiden Teile zueinander bewirkbar ist. Die einzelnen Kontaktflächen können als Punkt, Linie oder Fläche ausgebildet sein.

Nach einer bevorzugten Ausführungsform ist es vorgesehen, dass ein Stift als eine der Wirkflächen vorgesehen ist und die zweite Wirkfläche eine geometrische Form aufweist, welche eine Verschiebung des zweiten Teils der Bremse bewirkt, wenn der Stift entlang der geometrischen Form geführt wird. Der Stift kann die geometrische Form hierbei beispielsweise punkt- oder linienförmige berühren.

Erfindungsgemäß ist es vorgesehen, dass das Übertragungsmittel bei einer Verdrehung beziehungsweise einer Relativverschiebung des zweiten Teils der Bremse gegenüber dem rotierenden Mittel eine axiale Verschiebung der beiden Elemente zueinander bereitstellt. Insbesondere durch die Neigung der Wirkflächen kann durch ein Entlanggleiten der beiden Teile des Übertragungsmittels eine Relativverschiebung des zweiten Teils der Bremse gegenüber dem rotierenden Mittel bewirkbar sein. Bevorzugt ist es, dass die axiale Verschiebung unabhängig von einer Drehrichtung des rotierenden Mittels erfolgt.

Erfindungsgemäß ist es vorgesehen, dass die Hysteresebremse zumindest ein Hystereseelement und ein magnetisches Element aufweist, wobei vorzugsweise jeweils eines von beiden entweder am ersten Teil oder am zweiten Teil der Bremse vorgesehen ist.

Zweckmäßigerweise kann es vorgesehen sein, dass das Magnetelement und/oder das Hystereseelement ringförmig oder scheibenförmig und/oder segmentartig ausgebildet sind. Dabei können die beiden Elemente, ausgehend von einer Ausrichtung der Rotationsachse des rotierenden Mittels in Achsrichtung, hintereinander oder gegenüber der Rotationsachse radial übereinander vorgesehen sein. In beiden Fällen kann eine zur Rotationsachse parallele Verschiebung des zweiten Teils der Bremse zu einer Beabstandung der beiden Teile der Bremse führen.

Eine zweckmäßige Weiterbildung der vorliegenden Erfindung besteht darin, dass ein erstes Federelement oder ein erstes elastisches Element bereitgestellt sind, der Verstelleinrichtung entgegenzuwirken, und ausgebildet sind, den mindestens einen ersten Teil und den mindestens einen zweiten Teil der Hysteresebremse, vorzugsweise entgegen der Wirkrichtung der Verstelleinrichtung, anzunähern, soweit das Element die Kraft, die auf die Verstelleinrichtung wirkt, insbesondere ein Antriebsmoment, überwindet. Eine Wirkrichtung der Verstelleinrichtung kann insbesondere eine Beabstandung des ersten und des zweiten Teils der Bremse bereitstellen. Eine Annäherung entgegen der Wirkrichtung der Verstelleinrichtung kann daher insbesondere eine Annäherung des ersten und des zweiten Teils der Bremse bewirken/bedeuten.

Das elastische Element kann insbesondere eine Biege- oder eine Zugelastizität aufweisen, mittels welcher der zweite Teil der Bremse bewegbar sein kann. Grundsätzlich kann die Bremswirkung der Hysteresebremse umso größer sein, je näher der erste und der zweite Teil der Bremse zueinander stehen. Ist der Antrieb also ausgeschaltet oder in seiner Antriebswirkung reduziert, ist seine Einwirkung auf die Verstelleinrichtung beziehungsweise das Übertragungsmittel reduziert. Dadurch übersteigt das elastische Element oder die Feder in ihrer Kraft die Kraft, welche vom Antrieb auf die Verstelleinrichtung oder das Übertragungsmittel wirkt. Durch die Auslenkung beziehungsweise Beabstandung des zweiten Teils der Bremse von dem ersten Teil der Bremse können das elastische Element oder die Feder unter einer Zug- oder Biegespannung stehen, welche eine Rückstellkraft bereitstellt. Diese Rückstellkraft kann den zweiten Teil der Bremse zumindest teilweise zu seinem Ausgangspunkt zurückführen, soweit die Rückstellkraft die Kraft des Antriebs übersteigt. Alternativ oder ergänzend zu der Rückstellkraft eines elastischen Elements und/oder mindestens einer Feder kann die Feldstärke des Magnetfelds des Dauermagneten eine Rückstellkraft auf das Hystereseelement beziehungsweise das ferromagnetische Element ausüben, wodurch der erste Teil und der zweite Teil der Bremse einander anziehen können. Soweit diese magnetische Anziehungskraft für eine Bewegung des zweiten Teils der Bremse ausreicht, kann das Magnetfeld des Dauermagneten bereitgestellt werden, um eine Rückstellung des zweiten Teils der Bremse zumindest teilweise zu bewirken.

Erfindungsgemäß kann die Rückstellung eine Bewegung in einen Bereich oder eine Position bedeuten, in welchem/welcher der erste Teil und der zweite Teil der Bremse einander gegenüber besonders nah angeordnet sind. Man kann hierbei auch von einem Minimalabstand oder einem verringerten Abstand in einer Rückstellposition oder einem Rückstellbereich sprechen.

Bevorzugt kann es vorgesehen sein, dass ein zweites Federelement oder ein zweites elastisches Element bereitgestellt sind, dem ersten Federelement oder dem ersten elastischen Element dämpfend entgegenzuwirken. Wird der Antrieb ausgestellt oder verringert sich seine Umdrehungsgeschwindigkeit beziehungsweise sein Antriebsmoment, können das Magnetfeld, das elastische Element und/oder die Feder eine ruckartige beziehungsweise schlagartige Rückstellung des zweiten Teils der Bremse in einen Rückstellbereich oder eine Rückstellposition bewirken. Dies kann möglicherweise einen Einfluss auf die Materialeigenschaften haben, da hierbei ungebremst Teile der erfindungsgemäßen Vorrichtung aufeinanderschlagen können. Um diesem Umstand entgegenzuwirken, können das zweite Federelement oder das zweite elastische Element vorgesehen sein, dem ersten Federelement oder dem ersten elastischen Element entgegenzuwirken. Die Rückstellwirkung des ersten Federelements oder der des ersten elastischen Elements kann hierdurch gedämpft sein, wodurch einem Schlagen von Bauteilen der erfindungsgemäßen Vorrichtung entgegengewirkt sein kann.

In den beiliegenden Figuren zeigen:
- Fig. 1: eine Querschnittsansicht durch einen erfindungsgemäßen Antrieb,
- Fig. 2: einen Querschnitt durch die erfindungsgemäße Verstel-leinrichtung beziehungsweise Übertragungsmittel nach einer ersten Ausführungsform,
- Fig. 3: einen Querschnitt durch die erfindungsgemäße Verstelleinrichtung beziehungsweise Übertragungsmittel nach einer weiteren Ausführungsform,
- Fig. 4: eine perspektivische Darstellung der Verstelleinrichtung beziehungsweise des Übertragungsmittels in einer Ausgangsposition,
- Fig. 5: eine Seitenansicht auf die Ausführungsform gemäß Fig. 4,
- Fig. 6: eine perspektivische Darstellung der Verstelleinrichtung nach einer bevorzugten Ausführungsform und
- Fig. 7: eine vergrößerte Querschnittsansicht der erfindungsgemäßen Verstelleinrichtung nach einer bevorzugten Ausführungsform.

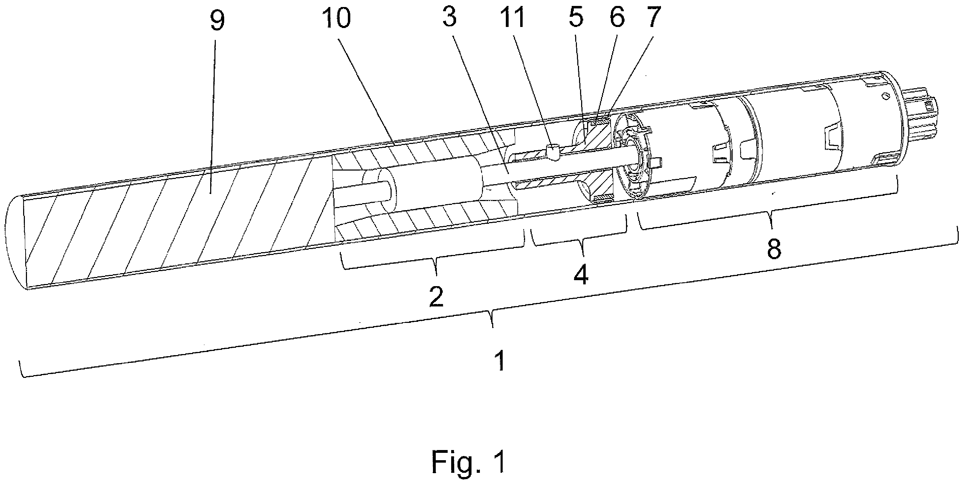

Fig. 1 zeigt einen erfindungsgemäßen Antrieb 1 mit einer Hysteresebremse 4. Der Antrieb weist einen Motor 2 auf, welcher zumindest einen Rotor und einen Stator aufweisen kann. Bevorzugt ist ebenfalls ein Getriebe 8 vorgesehen, mittels welchem beispielsweise Sonnenschutzsysteme, Rollläden und Rolltore übersetzt bewegbar sind.

Aufgrund des Getriebes 8 kann auch ein Motor 2 mit geringerer Leistung eingesetzt werden, um die gewünschte Bewegungswirkung zu erreichen. Bevorzugt ist die Hysteresebremse 4 zwischen Antrieb und Getriebe angeordnet, wodurch auch eine Bremse mit geringer Bremswirkung bereits das zu haltende oder zu bewegende Objekt (beispielsweise Sonnenschutzsysteme, Rollläden und Rolltore) in Position halten kann. Ebenfalls kann ein Bauteil 9 vorgesehen sein, mittels welchem eine Ansteuerung des Motors ermöglicht sein kann.

Die Hysteresebremse 4 kann einen zumindest 2-teiligen Aufbau (6, 7) aufweisen. Dabei kann ein erster Teil 7 der Bremse an einem statischen Teil des Antriebs, beispielsweise dem Gehäuse 10, angeordnet sein, und ein zweiter Teil 6 der Bremse 4 kann gegenüber dem ersten Teil 7 beweglich gelagert sein.

Nach der bevorzugten Ausführungsform gemäß Fig. 1 ist der zweite Teil 6 an einer Verstelleinrichtung 5 angeordnet. Dieser ist gegenüber dem ersten Teil 7 der Bremse und/oder gegenüber einer Antriebswelle 3, welche durch den Motor 2 drehend antreibbar ist, beweglich gelagert. Das heißt, dass der zweite Teil 6 der Hysteresebremse seine Position gegenüber dem ersten Teil 7 der Bremse verändern kann. Weiterhin bedeutet dies, dass der zweite Teil 6 der Bremse entlang beziehungsweise parallel zur Welle 3 des Motors 2 verschiebbar gelagert sein kann.

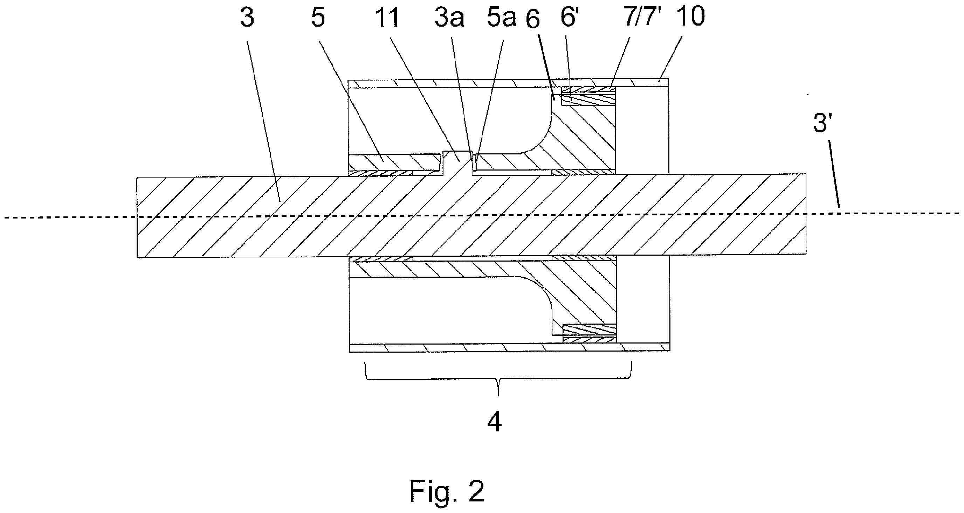

Für eine kontrollierte Verschiebbarkeit der Verstelleinrichtung 5 kann ein Führungselement 11, welches beispielsweise als Zapfen ausgebildet sein kann, vorgesehen sein. Das Führungselement 11 kann mit einer Wirkfläche der Verstelleinrichtung 5 wechselwirken/entlang dieser entlanggleiten, wie es beispielsweise in den Figuren 2, 3, 4, 6 und 7 dargestellt ist. Hierfür kann die Verstelleinrichtung 5 eine Wirkfläche beispielsweise in Form einer Führungsnut mit einer Führungskante aufweisen, entlang welcher oder innerhalb welcher das Führungselement 11 angeordnet ist. Die Verstelleinrichtung 5 kann beispielsweise mit der Führungsnut und/oder der Führungskante an dem Führungselement 11 entlanggleiten. Dies kann beispielsweise in Form einer Drehbewegung der Verstelleinrichtung 5 oder der Welle 3 geschehen, wodurch auch eine axiale Verlagerung der Verstelleinrichtung 5 gegenüber der Welle 3 ermöglicht sein kann. Auch kann dies eine Beabstandung des ersten Teils 7 der Bremse von dem zweiten Teil 6 der Bremse bedingen.

Durch die axiale Verlagerung des zweiten Teils 6 der Bremse 4 gegenüber dem ersten Teil 7 der Bremse 4 beziehungsweise entlang der Welle 3 kann eine Beabstandung der beiden Teile der Bremse bewirkbar sein, was die Bremswirkung der Hysteresebremse, also der Bremse, herabsetzen kann. Das Hystereseelement greift bei einer solchen Ausrichtung verringert in das Magnetfeld des Magneten ein.

Der erste Teil der Bremse und der zweite Teil der Bremse können ein Bremsteilpaar bilden, welches an einem der beiden Teile ein Magnetelement und an dem anderen der beiden Teile eine Hystereseelement aufweisen kann. Grundsätzlich ist es auch möglich, dass zumindest eines der beiden Teile sowohl Hystereseelemente als auch Magnetelemente aufweist, wobei das andere Element entweder ebenfalls beide Elemente oder ein Magnetelement oder ein Hystereseelement aufweisen kann.

Nach der Ausführungsform gemäß Fig. 1 sind ein Hystereseband an dem ersten Teil 7 und Magnetelemente an dem zweiten Teil 6 vorgesehen oder umgekehrt. Diese sind bezogen auf eine Rotationsachse 3' der Welle 3 koradial zueinander beziehungsweise übereinander angeordnet. In dieser Anordnung weisen die beiden Hysterese-Bremsbestandteile einen minimalen Abstand zueinander auf. In dieser Ausrichtung ist eine besonders große Bremsleistung bereitgestellt, da eine besonders hohe Annäherung des Hystereseelements an das Magnetfeld des Dauermagneten bereitgestellt ist. Je größer der Abstand des Hystereseelements von dem Magneten, desto geringer kann die Bremswirkung ausfallen und mit steigendem Abstand abfallen. Der zweite Teil der Bremse (6) kann insbesondre die Verstelleinrichtung und/oder das Übertragungsmittel sein.

Eine Verlagerung der Verstelleinrichtung 5 gegenüber dem ersten Teil 7 der Bremse beziehungsweise der Welle 3 kann insbesondere durch das Antreiben der Welle 3 erfolgen. Die Nut beziehungsweise Führungskante 5a der Nut kann einen Anschlag aufweisen, an welchem das Führungselement 11 bei einem Verdrehen anschlagen kann. Hierdurch kann das Führungselement 11 die Verstelleinrichtung 5 rotierend mitnehmen. Da die Führungsnuten oder die Führungskante der Nut bevorzugt mit einem Winkel gegenüber der Ausrichtung der Rotationsachse der Welle 3 angeordnet sind, der sich von einem 90°-Winkel beziehungsweise 180°-Winkel unterscheidet, kann ein Verdrehen der Welle eine geführte Verlagerung der Verstelleinrichtung 5 gegenüber der Welle 3 bzw. dem ersten Teil 7 der Bremse bewirken. Dies ist besonders deutlich aus Fig. 4 ersichtlich, welche die Führungsnuten deutlich mit zwei zueinander angewinkelten Segmenten zeigt, welche jeweils gegenüber der Ausdehnungsrichtung beziehungsweise Rotationsachse der Welle 3 angewinkelt ausgerichtet sind. Dadurch kann eine Verlagerung des Führungselements 11 zu einer Verschiebung der Verstelleinrichtung auf der Welle 3 führen. Die Verstelleinrichtung 5 kann mit seiner Außenkontur einen rotationssymmetrischen Körper bilden, welcher einen flaschenhalsartigen Teil aufweisen kann, in welchem vorzugsweise die Führungsnut oder Führungskante(n) angeordnet sind.

In einem radial breiteren Bereich können das Magnet- oder Hystereseelement (oder beides) angeordnet sein, wodurch in diesem Bereich ein besonders geringer Abstand der Verstelleinrichtung 5 gegenüber dem statischen Teil der Bremse, welcher beispielsweise an oder innerhalb des Gehäuses 10 angeordnet sein kann, bereitgestellt ist.
Durch den rotationssymmetrischen Aufbau kann eine Unwucht im Betrieb des Antriebs 2 vermieden werden, wenn die Verstelleinrichtung 5 nach erfolgter Beabstandung zwischen dem ersten Teil 7 und im zweiten Teil 6 der Hysteresebremse 4 bevorzugt im angetriebenen Zustand kontinuierlich mitläuft.

Soweit ein Stillstand des Motors 2 eintritt, kann zum einen durch eine immer noch bestehende, jedoch durch den Abstand verringerte Wechselwirkung zwischen Hystereseband und Magneten eine Anziehung erfolgen, welche die Verstelleinrichtung 5 in eine Ausgangsposition, wie sie beispielsweise in Fig. 1 dargestellt ist, zurückführen kann. Hierbei kann bei stehender Welle 3 die Verstelleinrichtung 5 eine Rotationsbewegung vollziehen, welche durch das Gleiten des Führungselements 11 an den Führungsnuten oder der Führungskante eine lineare Verlagerung der Verstelleinrichtung 5 gegenüber der Welle 3 beziehungsweise dem ersten Teil 7 der Bremse bewirken kann. Unterstützend kann auch eine Feder vorgesehen sein, welche eine Rückstellkraft auf die Verstelleinrichtung ausüben kann, so dass bei verringertem Drehmoment/verringerter Rotationsgeschwindigkeit die Feder eine Annäherung der beiden Teile der Bremse unterstützt oder bewirkt.

Fig. 2 zeigt eine Querschnittsansicht durch eine Verstelleinrichtung 5 vorzugsweise gemäß Fig. 1. In dieser sind das Führungsmittel 11 und die Führungskante 5a der Führungsnut deutlich ersichtlich. Das Führungselement 11 mit seiner Kante beziehungsweise Oberfläche 3a ist ebenfalls dargestellt, welches mit der Kante 5a beim Verlagern kontaktieren kann. Der erste Teil 7 der Bremse und der zweite Teil 6 der Bremse sind in dieser Ausführungsform übereinander beziehungsweise koradial zueinander in Bezug auf eine Längsachse der Welle 3 angeordnet. Soweit die Führungsnut und das Führungselement 11 dies durch den bereitgestellten Freiraum ermöglichen, ist eine Verlagerung des Verstellmittels 5 entlang der Welle 3 beziehungsweise parallel zur Welle 3 ermöglicht.

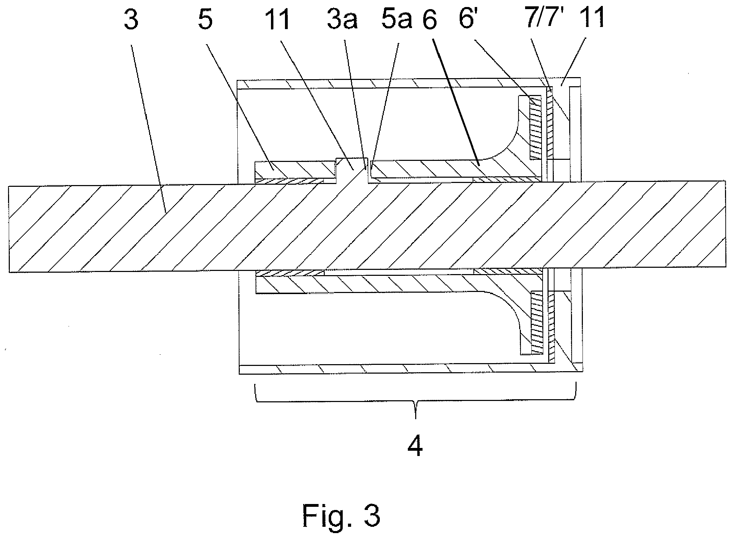

Fig. 3 zeigt eine weitere Ausführungsform der Bremse 4, welche sich von der Ausführungsform gemäß Fig. 2 dadurch unterscheidet, dass der erste Teil 7 der Bremse und der zweite Teil 6 der Bremse in Achsrichtung der Welle 3 hintereinander beziehungsweise voreinander angeordnet sind. Die beiden Teile 6 und 7 der Bremse zeigen demnach selbst bei einer Verlagerung des Feststellmittels 5 durchgängig zueinander im Gegensatz zur Ausführungsform nach Fig. 2, bei welcher der erste Teil 7 der Bremse und der zweite Teil 6 der Bremse relativ zueinander parallel verschoben werden. In beiden Ausführungsformen nach Fig. 2 und Fig. 3 kann dann eine besonders hohe Bremsleistung bereitgestellt sein, wenn die beiden Teile 6 und 7 der Bremse ihren minimal möglichen Abstand zueinander einnehmen. In Fig. 3 kann das Hystereseelement/ferromagnetische Element als Ring bereitgestellt sein und nach der Ausführungsform gemäß Fig. 2 als ein Band.

Fig. 4 zeigt eine perspektivische Darstellung der Hysteresebremse 4, insbesondere der Verstelleinrichtung 5, bei welcher die Führungsnut mit der Führungskante 5a und dem Führungselement 11 an der Welle 3 besonders deutlich ersichtlich ist. Wird das Führungselement 11 gegenüber der Verstelleinrichtung 5 bewegt, bewegt sich auch das Führungselement 11 in der Nut. Durch die angewinkelte Ausrichtung der Führungskannte 5a der Nut bewirkt eine Verdrehung des Führungselements 11 (bzw. der Welle 3) in der Nut eine axiale Verlagerung der Verstelleinrichtung 5 entlang der Welle 3. Damit das Führungselement 11 besonders geeignet führbar ist, können die Breite der Nut und der Durchmesser des Führungselements 11 ähnlich sein, was den Spielraum des Führungselements 11 in der Nut gering hält und einem Schlagen oder einem Flackern der Verstelleinrichtung vorbeugen kann. In Fig. 4 ist die Verstelleinrichtung gegenüber der Welle in einer Ausgangsposition gezeigt, in welcher der zweite Teil 6 der Bremse gegenüber dem ersten Teil 7 der Bremse koradial beziehungsweise in einer bereitgestellten Position für eine maximale Bremswirkung angeordnet ist.

Durch ein Verdrehen der Welle 3 mit oder gegen den Uhrzeigersinn wird der Zapfen 11 einem der beiden seitlichen Enden der Führungsnuten zugestellt. Soweit das Führungselement 11 diese Position erreicht, kann das Führungselement 11 die Verstelleinrichtung 5 bei einer Rotation der Welle 3 in Rotationsrichtung mitnehmen.

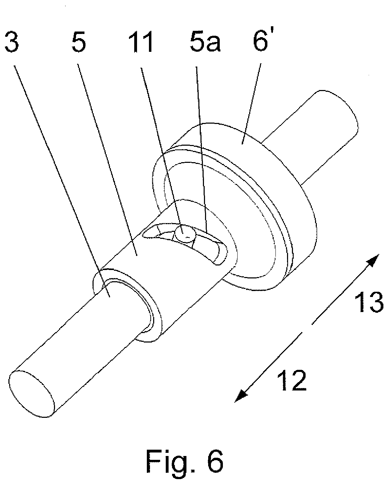

Durch eine Verlagerung des Führungselements 11 zu einem der beiden seitlichen Enden der Führungsnut wird auch eine Verlagerung der Verstelleinrichtung 5 gegenüber der Welle 3 bereitgestellt, da die Enden der Führungsnut in Achsrichtung der Welle 3 eine andere axiale Position aufweisen als die dargestellte Ruheposition. Es wird also eine Verschiebung der Verstelleinrichtung beziehungsweise des zweiten Teils 6 der Bremse gegenüber der Welle 3 beziehungsweise gegenüber dem ersten Teil 7 der Bremse durch Verlagerung des Führungselements 11 in der Nut bewirkt. Diese Verlagerung ist durch den Pfeil 12 dargestellt. Die Form der Nut ist nur beispielhaft wiedergegeben und kann auch andere Formen aufweisen. Insbesondere kann eines der beiden Flügel zur rechten beziehungsweise linken Seite des Führungselements 11, in Fig. 4 dargestellt, in eine entgegengesetzte Richtung weisen (z. B. Fig. 6), wodurch in Abhängigkeit von der Rotationsrichtung eine Verlagerung der Verstelleinrichtung 5 entweder in Richtung Pfeil 12 oder in die entgegengesetzte Richtung bewirkbar sein kann.

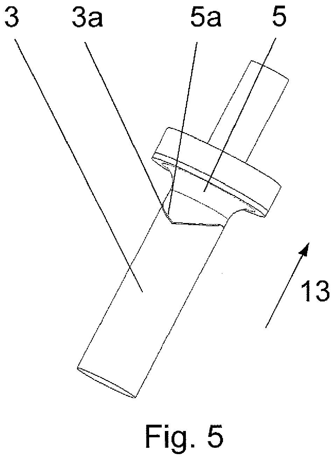

Fig. 5 zeigt eine Ausführungsform, bei der die Führungskante 5a schraubenförmig ausgebildet ist. Grundsätzlich können auch das Führungselement 11 und die Führungskante 5a (oder Führungsnut) in ihrer Position/Bereitstellung vertauscht sein, also entsprechend vertauscht als Teil der Verstelleinrichtung beziehungsweise an der Welle vorgesehen sein. Das Führungselement 11 kann ebenfalls auch als Kante oder Fläche ausgebildet sein, welche mit der Führungskante 5a der Verstelleinrichtung 5 wechselwirken kann.

In Fig. 6 ist die Verstelleinrichtung 5 mit einer Führungsnut dargestellt, welche ausgehend von der dargestellten (maximalen) Bremsposition des Führungselements 11 in der Nut eine Verstellung zu zwei axialen Richtungen der Welle 3 ermöglicht. Dabei weist die Führungsnut gegenüber der dargestellten Bremsposition (Teil 7 und Teil 6 nahe/maximal beieinander angeordnet) einen Bereich auf, welcher mehr dem hinteren Ende der Verstelleinrichtung 5 zugeordnet ist und das andere Ende dem vorderen Ende der Verstelleinrichtung 5 zugewandt ist. Durch ein Verdrehen der Welle 3 gegenüber der Verstelleinrichtung 5 wird das Führungselement 11 dem rechten Ende der Führungsnut zugeführt und eine Verlagerung in Richtung Pfeil 12 bewirkt. Entsprechendes gilt für ein Verdrehen gegen den Uhrzeigersinn und eine Verlagerung der Verstelleinrichtung in Richtung des Pfeils 13. Die Führungsnut ist hier linear ausgebildet, kann jedoch auch beispielsweise bogenförmig ausgebildet sein.

Grundsätzlich können bei allen Ausführungsformen ein Gleit- oder Rollenlager beziehungsweise ein Lagermittel zwischen der Verstelleinrichtung 5 und der Welle 3 vorgesehen sein, um eine möglichst reibungsarme Verdrehung beziehungsweise Bewegung der Verstelleinrichtung 5 auf der Welle 3 zu ermöglichen. Die Verstelleinrichtung 5 kann ebenfalls als Übertragungsmittel im Sinne einer Welle dienen.

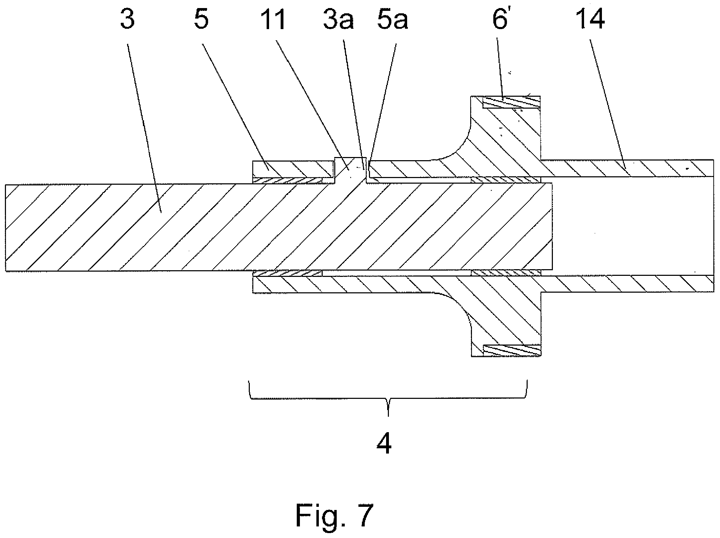

In Fig. 7 ist die Welle 3 dargestellt, welche in beziehungsweise innerhalb der Verstelleinrichtung 5 endet. Die Verstelleinrichtung 5 kann eine Hülse 14 aufweisen, welche auch als Vollkörper ausgebildet und bereitgestellt sein kann, die Welle 3 in einem Bereich nach der Verstelleinrichtung 5 zu ersetzen. Soweit das Führungselement 11 in einem Endbereich der Nut, voran als Anschlag beschrieben, angeordnet ist, führt eine Rotation der Welle in Richtung des Anschlags zu einer Rotation der Verstelleinrichtung 5 mit der Welle 3. Hierdurch können die Hülse beziehungsweise der Wellenfortsatz 14 antreibbar sein und hierdurch die Funktion der Welle übernehmen. Bei dieser Ausführungsform erfolgt die Kraftübertragung auf Einrichtungen, wie beispielsweise Rolltore, Markisen, Sonnenschutzsysteme und dergleichen, nicht über die Welle direkt sondern über die Verstelleinrichtung 5 und deren Fortsatz 14.

## Patentansprüche

1. Antrieb (1) zum Antreiben von Sonnenschutzsystemen, Rollläden und Rolltoren, mit einer Hysteresebremse (4), welche einen mehrteiligen Aufbau und mindestens ein Hystereseelement (7') und ein magnetisches Element (6') aufweist,
bei welcher ein mindestens erster Teil (7) der Bremse (4) statisch an dem Antrieb vorgesehen ist und mindestens ein zweiter Teil (6) der Bremse (4) mit einer Antriebswelle (3) eines Motors (2) zusammenwirkt, wobei der Antrieb (1) eine Verstelleinrichtung (5, 11) aufweist, die einen Abstand zwischen dem statisch vorgesehenen ersten Teil (7) und dem mindestens zweiten Teil (6) verändert,
**dadurch gekennzeichnet, dass**
die Verlagerung des zweiten Teils (6) mittels eines Antriebsmoments des Motors (2) des Antriebs (1) über ein Übertragungsmittel (5, 11) bewirkbar ist, und dass das Übertragungsmittel (5, 11) bei einer Verdrehung beziehungsweise einer Relativverschiebung des zweiten Teils (6) der Bremse (4) gegenüber der Antriebswelle (3) eine axiale Verschiebung der beiden Elemente (6, 7) zueinander bereitstellt.

2. Antrieb nach Anspruch 1,
**dadurch gekennzeichnet,**
**dass** der zweite Teil (6) der Bremse gegenüber der Antriebswelle (3) des Antriebs (1) verlagerbar angeordnet ist.

3. Antrieb nach Anspruch 2,
**dadurch gekennzeichnet,**
**dass** die Verlagerung des zweiten Teils (6) gegenüber der Antriebswelle (3) als eine Längsverschiebung entlang oder parallel zu einer Rotationsache (3') der Antriebswelle (3) bereitgestellt ist.

4. Antrieb nach einem der Ansprüche 1 bis 3, **dadurch gekennzeichnet,**
**dass** das Übertragungsmittel mindestens zweiteilig ausgebildet ist, wobei ein erster Teil (5) des Übertragungsmittels mit dem zweiten Teil (6) der Bremse zusammenwirkt und der zweite Teil des Übertragungsmittels mit der Antriebswelle (3) des Motors (2) zusammenwirkt.

5. Antrieb nach Anspruch 4, **dadurch gekennzeichnet,**
**dass** mindestens einer der zwei Teile des Übertragungsmittels mit korrelierenden Wirkflächen bereitgestellt ist (3a, 5a), welche gegenüber der Rotationsache einen von 90°-oder 180°-Winkel abweichende Ausrichtungsneigung aufweist, wobei durch das Antriebsmoment eine Relativverschiebung der beiden Teile zueinander bewirkbar ist.

6. Antrieb nach Anspruch 5, **dadurch gekennzeichnet,**
**dass** die axiale Verschiebung unabhängig von einer Drehrichtung der Antriebswelle (3) erfolgt.

7. Antrieb nach Anspruch 6, **dadurch gekennzeichnet,**
**dass** die axiale Verschiebung in Abhängigkeit von einer Drehrichtung der Antreibswelle (3) in unterschiedliche Richtungen erfolgt.

8. Antrieb nach einem der Ansprüche 1 bis 7, **dadurch gekennzeichnet,**
**dass** jeweils eines von dem Hystereseelement (7') und dem magnetischen Element (6') entweder am ersten Teil (7) oder am zweiten Teil (6) der Bremse vorgesehen ist.

9. Antrieb nach einem der Ansprüche 1 bis 8, **dadurch gekennzeichnet,**
**dass** das magnetische Element (6') und/oder das Hystereseelement (7') ringförmig oder scheibenförmig und/oder segmentartig ausgebildet sind.

10. Antrieb nach Anspruch 8, **dadurch gekennzeichnet,**
**dass** ein erstes Federelement oder ein erstes elastisches Element bereitgestellt ist, der Verstelleinrichtung bei Beabstanden der beiden Teile der Bremse entgegenzuwirken und ausgebildet ist, den mindestens einen ersten Teil (7) und den mindestens einen zweiten Teil (6) der Hysteresebremse, vorzugsweise entgegen der Wirkrichtung der Verstelleinrichtung, anzunähern, soweit das Federelement oder das elastische Element die Kraft, welche auf die Verstelleinrichtung wirkt, insbesondere ein Antriebsmoment, überwindet.

11. Antrieb nach Anspruch 10, **dadurch gekennzeichnet,**
**dass** ein zweites Federelement oder ein zweites elastisches Element bereitgestellt sind, dem ersten Federelement oder dem ersten elastischen Element dämpfend entgegenzuwirken.

12. Verfahren zum verschleißarmen Bereitstellen einer variablen Bremswirkung auf einen Antrieb (2) nach einem der Ansprüche 1-11, **dadurch gekennzeichnet,**
**dass** in Anhängigkeit von einem Drehmoment des Antriebs (2) der zweite Teil (6) von dem ersten Teil (7) beabstandet wird, wobei eine Verringerung der Bremswirkung der Hysteresebremse bewirkt wird.

## Claims

1. Drive (1) for driving sun protection systems, roller shutters and roller doors, with a hysteresis brake (4), which has a multi-part structure and at least one hysteresis element (7') and one magnetic element (6'),
wherein at least a first part (7) of the brake (4) is provided statically on the drive and at least a second part (6) of the brake (4) cooperates with a drive shaft (3) of a motor (2), the drive having an adjusting device (5, 11) which varies a distance between the statically provided first part (7) and the at least second part (6)
**characterized in**
**in that** the displacement of the second part (6) can be effected by means of a drive torque of the motor (2) of the drive (1) via a transmission means (5, 11), and
**in that** the transmission means (5, 11) provides an axial displacement of the two elements (6, 7) relative to one another in the event of a rotation or a relative displacement of the second part (6) of the brake (4) relative to the rotating means (3).

2. Drive according to claim 1,
**characterized in**
**that** the second part (6) of the brake is arranged displaceable relative to the drive shaft (3) of the drive (1).

3. Drive according to claim 2,
**characterized in**
**that** the displacement of the second part (6) relative to the drive shaft (3) is provided as a longitudinal displacement along or parallel to a rotation axis (3') of the drive shaft (3).

4. Drive according to any one of claims 1 to 3,
**characterized in**
**that** the transmission means is formed at least in two parts, wherein a first part (5) of the transmission means cooperates with the second part (6) of the brake and the second part of the transmission means cooperates with the drive shaft (3) of the motor (2).

5. Drive according to claim 4,
**characterized in**
**that** at least one of the two parts of the transmission means is provided with correlating active surfaces (3a, 5a), which have an orientation inclination deviating from 90° or 180° with respect to the rotational matter, wherein a relative displacement of the two parts with respect to each other can be effected by the drive torque.

6. Drive according to claim 5,
**characterized in**
**that** the axial displacement takes place independently of a direction of rotation of the drive shaft (3).

7. Drive according to claim 6,
**characterized in that**
that the axial displacement takes place in different directions depending on a direction of rotation of the drive shaft (3).

8. Drive according to one of the claims 1 to 7,
**characterized in**
**that** one each of the hysteresis element (7') and the magnetic element (6') is provided either on the first part (7) or on the second part (6) of the brake.

9. Drive according to one of the claims 1 to 8,
**characterized in**
**that** the magnetic element (6') and/or the hysteresis element (7') are ring-shaped or disc-shaped and/or segment-shaped.

10. Drive according to claim 8,
**characterized in**
**in that** a first spring element or a first elastic element is provided to counteract the adjusting device when the two parts of the brake are spaced apart and is designed to bring the at least one first part (7) and the at least one second part (6) of the hysteresis brake closer, preferably counter to the effective direction of the adjusting device, insofar as the spring element or the elastic element overcomes the force acting on the adjusting device, in particular a drive torque.

11. Drive according to claim 10,
**characterized in**
**that** a second spring element or a second elastic element is provided to counteract the first spring element or the first elastic element in a damping manner.

12. Method for providing a variable braking effect on a drive (2) with low wear, according to one of claims 1 to 11
**characterized in**
**that** in dependence on a torque of the drive (2) the second part (6) is spaced apart from the first part (7), whereby a reduction of the braking effect of the hysteresis brake is effected.

## Revendications

1. Commande (1) pour la propulsion particulière de systèmes de protection du soleil, des volets roulants et des portes roulantes munie d'un frein hystérèse (4) qui présente une construction en plusieurs partis et au minimum un élément hystérèse (7') et un élément magnétique (6') où une première partie au minimum (7) du frein (4) est prévue à titre statique au niveau de la commande et au minimum une deuxième partie (6) du frein (4) interagit avec une onde de la commande (3) d'un moteur (2) d'un moyen rotatif (3) particulièrement avec une onde de la commande (1) où la commande (1) présente un dispositif de réglage (5, 11) changeant la distance entre la première partie prévue statique (7) et la deuxième partie au minimum (6)
Est caractérisée de sorte que
Le déplacement de la deuxième partie (6) est actionnable par le biais d'un moment de commande du moteur (2) de la commande (1) via un moyen de transfert (5, 11) et que le moyen de transfert (5,11) fournit mutuellement lors d'une rotation ou le cas échéant lors d'un déplacement relatif de la deuxième partie (6) du frein (4) en face de l'onde de commande (3) un déplacement axial des deux éléments (6, 7).

2. Commande selon la revendication 1 est caractérisée de sorte que la deuxième partie (6) du frein est disposée en face de l'onde de la commande du moyen rotatif (3) de la commande (1) à titre déplaçable.

3. Commande selon la revendication 2 est caractérisée de sorte que le déplacement de la deuxième partie (6) est fourni en face de l'onde de la commande du moyen rotatif (3) en qualité de déplacement longitudinal au long ou parallèlement à l'axe rotatif (3') de l'onde de la commande du moyen rotatif.

4. Commande selon l'une des revendications 1 jusqu'à 3 est caractérisée de sorte que le moyen de transfert est formé de deux parties au minimum où une première partie (5) du moyen de transfert interagit avec la deuxième partie (6) du frein et la deuxième partie du moyen de transfert interagit avec l'onde de la commande du moyen rotatif (3) du moteur de la commande (2).

5. Commande selon la revendication 4 est caractérisée de sorte qu'au minimum l'une des deux parties du moyen de transfert est fournie avec des surfaces actives en corrélation (3a, 5a) présentant en face de l'axe de rotation une inclinaison d'alignement d'angle 90° ou 180° où un déplacement relatif des deux parties est actionnable mutuellement par le biais du moment de la commande.

6. Commande selon la revendication 5 est caractérisée de sorte que le déplacement axial a lieu indépendamment de la direction de rotation de l'onde de la commande du moyen rotatif (3).

7. Commande selon la revendication 6 est caractérisée de sorte que le déplacement axial a lieu dépendamment de la direction de rotation de l'onde de la commande du moyen rotatif (3) dans divers directions.

8. Commande selon l'une des revendications 1 jusqu'à 7 est caractérisée de sorte que respectivement l'un des moyens hystérèses (7') et l'élément magnétique (6') est prévu soit au niveau de la première partie (7) ou la deuxième partie (6) du frein.

9. Commande selon l'une des revendications 1 jusqu'à 8 est caractérisée de sorte que l'élément magnétique (6') et/ou l'élément hystérèse (7') sont formés en forme d'anneau, de disques et/ou de segments.

10. Commande selon la revendication 8 est caractérisée de sorte qu'un premier élément ressort ou un premier élément élastique est fourni pour contrer le dispositif de réglage en distançant les deux parties du frein et est formé de sorte à rapprocher au minimum une première partie (7) et au minimum la deuxième partie (6) du frein hystérèse, à titre préférentiel contre la direction d'action du dispositif de réglage dans la mesure où l'élément ressort ou l'élément élastique surmonte la force agissant sur le dispositif de réglage, particulièrement sur le moment de la commande.

11. Commande selon la revendication 10 est caractérisée de sorte qu'un deuxième élément ressort ou un deuxième élément élastique sont fournis pour contrer le premier élément ressort ou le premier élément élastique à titre atténué.

12. Procédé pour fournir à faible usure une action variable de frein sur une commande (2) selon l'une des revendications 1-11 est caractérisé de sorte que la deuxième partie (6) est distancée dépendamment du moment de rotation de la commande (2) de la première partie (7) où une réduction de l'effet du frein est provoqué par le biais du frein hystérèse.
